# DEMANDE DE BREVET EUROPEEN

(11) **EP 3 627 329 A1**
(43) Date de publication de la demande: **25.03.2020**
(21) Numéro de dépôt: 19198608.2
(22) Date de dépôt: 20.09.2019
(51) Int. Cl.: G06F 12/0862, G06N 20/00, G06F 11/34

(54) **PROCÉDÉ DE DÉTERMINATION DU TYPE DE SÉQUENCE TEMPORELLE D'ACCÈS MÉMOIRE SE DEROULANT LORS D'UNE EXÉCUTION D'UNE APPLICATION INFORMATIQUE**

(30) Priorité: 21.09.2018 FR 1858611
(71) Demandeur: Bull SAS, 78340 Les Clayes-sous-Bois (FR)
(72) Inventeur: PLATINI, Marc, 38100 Grenoble (FR); MORVAN, Eric, 38450 Vif (FR); PAULETTO, Loïc, 38100 Grenoble (FR)
(74) Mandataire: Plasseraud IP

(57) **Abrégé**

L'invention concerne un procédé de détermination du type de séquence temporelle d'accès mémoire, se déroulant lors d'une exécution d'une application informatique, à partir d'un jeu de plusieurs paramètres (1, 5) distincts de lecture et/ou d'écriture des blocs de données en mémoire, comprenant : d'abord, pour chaque paramètre parmi au moins deux paramètres distincts (1, 5) dudit jeu de paramètres, une première classification dudit paramètre, parmi plusieurs catégories distinctes entre elles, éventuellement différentes entre paramètres, qui est réalisée par un premier niveau de technique de regroupement (4, 7) en plusieurs groupes distincts par minimisation de distance entre les éléments d'un même groupe, dont lesdits éléments sont des variations temporelles dudit paramètre, résultant en la classification dudit paramètre dans une catégorie donnée à un moment donné, ensuite, une deuxième classification de l'ensemble dudit jeu de paramètres classifiés, parmi plusieurs types prédéterminés de séquence temporelle d'accès mémoire (9), distincts entre eux, qui est réalisée par un deuxième niveau de technique de regroupement (8) en plusieurs groupes distincts par minimisation de distance entre les éléments d'un même groupe, dont lesdits éléments sont des jeux de catégories données correspondant audit jeu de paramètres classifiés à différents moments donnés, résultant en la classification dudit jeu de paramètres classifiés dans un type prédéterminé (9) de séquence temporelle d'accès mémoire donné à un moment donné.

## Description

### DOMAINE DE L'INVENTION

L'invention concerne le domaine des procédés de détermination du type de séquence temporelle d'accès mémoire se déroulant lors d'une exécution d'une application informatique, et le domaine des procédés de détermination du type de fonctionnement d'un composant informatique d'une machine informatique se déroulant lors d'une exécution d'une application informatique, ainsi que le domaine des procédés de détermination du taux d'utilisation d'un microprocesseur se déroulant lors d'une exécution d'une application informatique.

### CONTEXTE DE L'INVENTION

Selon un art antérieur de procédé de détermination du type de séquence temporelle d'accès mémoire, se déroulant lors d'une exécution d'une application informatique, à partir d'un jeu de plusieurs paramètres distincts de lecture et/ou d'écriture des blocs de données en mémoire, il est connu de faire une sorte de fonction globale à partir de l'ensemble dudit jeu de paramètres classifiés, et de réaliser sur cette fonction globale une technique de regroupement en plusieurs groupes distincts par minimisation de distance entre les éléments d'un même groupe, les éléments étant des valeurs de cette fonction globale, résultant en la classification dudit jeu de paramètres classifiés dans un type prédéterminé de séquence temporelle d'accès mémoire.

Un premier inconvénient principal est la précision et la fiabilité relatives du résultat obtenu par cette technique de regroupement en plusieurs groupes distincts par minimisation de distance entre les éléments d'un même groupe, précision et fiabilité relatives qui pourraient être améliorées et qui peuvent devenir insuffisantes pour certaines utilisations.

Un deuxième inconvénient secondaire est d'une part la nécessité d'utiliser une base de données d'apprentissage et d'autre part l'utilisation d'une base de données d'apprentissage qui sera soit complexe et coûteuse pour donner un résultat correct mais perfectible soit plus limitée et plus accessible mais pour donner un résultat moins bon et relativement décevant.

### RESUME DE L'INVENTION

Le but de la présente invention est de fournir un procédé de détermination du type de séquence temporelle d'accès mémoire se déroulant lors d'une exécution d'une application informatique palliant au moins partiellement les inconvénients précités.

Plus particulièrement, tout en ne renonçant pas forcément à l'utilisation d'une base de données d'apprentissage pour initialiser la technique de regroupement en plusieurs groupes distincts par minimisation de distance entre les éléments d'un même groupe, au lieu de toujours chercher soit à augmenter la taille de cette base de données d'apprentissage, soit à améliorer la structure et l'efficacité de cette base de données d'apprentissage comme dans le prolongement de l'art antérieur existant, l'invention s'est plutôt posée le double problème suivant, à savoir s'il était possible :
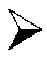 d'une part de rendre plutôt facultative l'utilisation d'une base de données d'apprentissage pour initialiser la technique de regroupement en plusieurs groupes distincts par minimisation de distance entre les éléments d'un même groupe ?
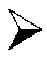 tout en, d'autre part, améliorant notablement la précision et la fiabilité du résultat obtenu ?
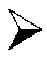 le tout, en conservant une complexité et un coût globaux raisonnables pour l'ensemble du système !

Pour cela, selon l'invention, l'approche retenue est différente. En effet, au lieu de chercher à améliorer soit l'efficacité de la base de données d'apprentissage soit l'efficacité intrinsèque de la technique de regroupement en plusieurs groupes distincts par minimisation de distance entre les éléments d'un même groupe, l'invention propose de dédoubler le niveau de la technique de regroupement en plusieurs groupes distincts par minimisation de distance entre les éléments d'un même groupe, en appliquant celui-ci d'abord une première fois au niveau des différents paramètres considérés, éventuellement d'une manière optimisée pour chaque type de paramètre, puis une deuxième fois au niveau de l'ensemble du jeu des paramètres qui auront d'abord été classifiés par le premier niveau de technique de regroupement en plusieurs groupes distincts par minimisation de distance entre les éléments d'un même groupe, éventuellement d'une manière particulièrement appropriée à la structure de cet ensemble du jeu de paramètres classifiés.

En appliquant cette technique de regroupement en plusieurs groupes distincts par minimisation de distance entre les éléments d'un même groupe, à deux niveaux, un premier niveau des paramètres pris séparément d'abord, un deuxième niveau des paramètres pris en combinaison ensuite, le résultat obtenu présente les avantages suivants :
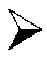 la précision et la fiabilité sont nettement améliorées, à complexité comparable,
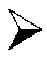 le recours à une base de données d'apprentissage est devenu facultatif, le système pouvant auto-apprendre directement en temps réel, sans initialisation préalable complexe.

Selon l'invention, il est prévu un procédé de détermination du type de séquence temporelle d'accès mémoire, se déroulant lors d'une exécution d'une application informatique, à partir d'un jeu de plusieurs paramètres distincts de lecture et/ou d'écriture des blocs de données en mémoire, comprenant : d'abord, pour chaque paramètre parmi au moins deux paramètres distincts dudit jeu de paramètres, une première classification dudit paramètre, parmi plusieurs catégories distinctes entre elles, éventuellement différentes entre paramètres, qui est réalisée par un premier niveau de technique de regroupement en plusieurs groupes distincts par minimisation de distance entre les éléments d'un même groupe, dont lesdits éléments sont des variations temporelles dudit paramètre, résultant en la classification dudit paramètre dans une catégorie donnée à un moment donné, ensuite, une deuxième classification de l'ensemble dudit jeu de paramètres classifiés, parmi plusieurs types prédéterminés de séquence temporelle d'accès mémoire, distincts entre eux, qui est réalisée par un deuxième niveau de technique de regroupement en plusieurs groupes distincts par minimisation de distance entre les éléments d'un même groupe, dont lesdits éléments sont des jeux de catégories données correspondant audit jeu de paramètres classifiés à différents moments donnés, résultant en la classification dudit jeu de paramètres classifiés dans un type prédéterminé de séquence temporelle d'accès mémoire donné à un moment donné.

Selon l'invention, il est de plus prévu une méthode d'amélioration du temps d'exécution d'une application informatique, comprenant au moins un cycle, ledit cycle étant de préférence répété en permanence et en temps réel, comprenant : un procédé de détermination du type de séquence temporelle d'accès mémoire se déroulant lors de l'exécution de ladite application informatique, selon l'invention, un procédé de pré-chargement de données, à partir d'un système de mémoire de masse, vers un système de mémoire cache, en fonction du type de séquence temporelle d'accès mémoire déterminé, de préférence en associant respectivement aux types de séquence temporelle d'accès mémoire déterminés des types prédéterminés de pré-chargement de données.

Ainsi, l'amélioration du procédé de détermination du type de séquence temporelle d'accès mémoire se déroulant lors de l'exécution de ladite application informatique, permet d'obtenir une meilleure efficacité de pré-chargement de données, à partir d'un système de mémoire de masse, vers un système de mémoire cache, résultant en une amélioration du temps d'exécution d'une application informatique.

De préférence, ledit procédé de détermination n'est pas réalisé par un modèle d'apprentissage ayant été préalablement paramétré à partir d'une base de données de certains types prédéterminés de séquences temporelles d'accès mémoire,

De préférence ledit procédé de détermination apprend tout seul en réalisant en temps réel lesdites classifications au fur et à mesure sur les variations temporelles desdits paramètres.

Ainsi, l'absence d'utilisation d'un modèle d'apprentissage ayant été préalablement paramétré à partir d'une base de données de certains types prédéterminés de séquences temporelles d'accès mémoire, permet de nettement simplifier l'ensemble du procédé, sans dégrader ses performances.

Selon l'invention, il est aussi prévu un procédé de détermination du type de fonctionnement d'un composant informatique d'une machine informatique, se déroulant lors d'une exécution d'une application informatique, à partir d'un jeu de plusieurs paramètres distincts représentatifs dudit fonctionnement, comprenant : d'abord, pour chaque paramètre parmi au moins deux paramètres distincts dudit jeu de paramètres, une première classification dudit paramètre, parmi plusieurs catégories distinctes entre elles, éventuellement différentes entre paramètres, qui est réalisée par un premier niveau de technique de regroupement en plusieurs groupes distincts par minimisation de distance entre les éléments d'un même groupe, dont lesdits éléments sont des variations temporelles dudit paramètre, résultant en la classification dudit paramètre dans une catégorie donnée à un moment donné, ensuite, une deuxième classification de l'ensemble dudit jeu de paramètres classifiés, parmi plusieurs types prédéterminés de fonctionnement dudit composant informatique, distincts entre eux, qui est réalisée par un deuxième niveau de technique de regroupement en plusieurs groupes distincts par minimisation de distance entre les éléments d'un même groupe, dont lesdits éléments sont des jeux de catégories données correspondant audit jeu de paramètres classifiés à différents moments donnés, résultant en la classification dudit jeu de paramètres classifiés dans un type prédéterminé de fonctionnement dudit composant informatique donné à un moment donné.

En effet, également selon l'invention, le procédé de détermination du type de séquence temporelle d'accès mémoire, se déroulant lors d'une exécution d'une application informatique, à partir d'un jeu de plusieurs paramètres distincts de lecture et/ou d'écriture des blocs de données en mémoire, et en particulier l'utilisation, préconisée par l'invention, d'un double niveau de technique de regroupement en plusieurs groupes distincts par minimisation de distance entre les éléments d'un même groupe, peuvent aussi être généralisés de manière similaire à un procédé de détermination du type de fonctionnement d'un composant informatique d'une machine informatique, se déroulant lors d'une exécution d'une application informatique, à partir d'un jeu de plusieurs paramètres distincts représentatifs dudit fonctionnement.

Selon l'invention, il est encore prévu un procédé de détermination du taux d'utilisation d'un microprocesseur, se déroulant lors d'une exécution d'une application informatique, à partir d'un jeu de plusieurs paramètres distincts représentatifs dudit taux d'utilisation, comprenant : d'abord, pour chaque paramètre parmi au moins deux paramètres distincts dudit jeu de paramètres, une première classification dudit paramètre, parmi plusieurs catégories distinctes entre elles, éventuellement différentes entre paramètres, qui est réalisée par un premier niveau de technique de regroupement en plusieurs groupes distincts par minimisation de distance entre les éléments d'un même groupe, dont lesdits éléments sont des variations temporelles dudit paramètre, résultant en la classification dudit paramètre dans une catégorie donnée à un moment donné, ensuite, une deuxième classification de l'ensemble dudit jeu de paramètres classifiés, parmi plusieurs gammes prédéterminées de taux d'utilisation dudit microprocesseur, distinctes entre elles, qui est réalisée par un deuxième niveau de technique de regroupement en plusieurs groupes distincts par minimisation de distance entre les éléments d'un même groupe, dont lesdits éléments sont des jeux de catégories données correspondant audit jeu de paramètres classifiés à différents moments donnés, résultant en la classification dudit jeu de paramètres classifiés dans une gamme prédéterminée de taux d'utilisation dudit microprocesseur donnée à un moment donné.

En effet, toujours selon l'invention, le procédé de détermination du type de séquence temporelle d'accès mémoire, se déroulant lors d'une exécution d'une application informatique, à partir d'un jeu de plusieurs paramètres distincts de lecture et/ou d'écriture des blocs de données en mémoire, et en particulier l'utilisation, préconisée par l'invention, d'un double niveau de technique de regroupement en plusieurs groupes distincts par minimisation de distance entre les éléments d'un même groupe, peuvent aussi être utilisés pour un procédé de détermination du taux d'utilisation d'un microprocesseur, se déroulant lors d'une exécution d'une application informatique, à partir d'un jeu de plusieurs paramètres distincts représentatifs dudit taux d'utilisation.

De préférence, lesdits paramètres classifiés comprennent plusieurs paramètres parmi les paramètres suivants : le nombre d'instructions par cycle, le débit d'accès à la mémoire vive, et/ou le temps d'accès à la mémoire vive, le nombre de manques dans la mémoire cache, le nombre d'accès mémoire réalisés pendant une période de temps donnée.

Ainsi, ce jeu de paramètres est particulièrement bien représentatif et bien adapté pour améliorer le procédé de détermination du taux d'utilisation d'un microprocesseur, se déroulant lors d'une exécution d'une application informatique, à partir d'un jeu de plusieurs paramètres distincts représentatifs dudit taux d'utilisation.

De préférence, lesdites gammes prédéterminées de taux d'utilisation dudit microprocesseur comprennent au moins les gammes suivantes : faible utilisation du microprocesseur, éventuellement couplée à une utilisation intense de la mémoire, utilisation intense du microprocesseur, éventuellement couplée à une faible utilisation de la mémoire.

Ainsi, ces gammes prédéterminées correspondent à des fonctionnements suffisamment distincts du procédé de détermination du taux d'utilisation d'un microprocesseur, se déroulant lors d'une exécution d'une application informatique, à partir d'un jeu de plusieurs paramètres distincts représentatifs dudit taux d'utilisation, pour pouvoir être discriminées efficacement et simplement.

Selon l'invention, il est également prévu une méthode d'amélioration du temps d'exécution d'une application informatique, comprenant au moins un cycle, ledit cycle étant de préférence répété en permanence et en temps réel, comprenant : un procédé de détermination du type de fonctionnement d'un composant informatique d'une machine informatique ou du taux d'utilisation d'un microprocesseur se déroulant lors de l'exécution de ladite application informatique, selon l'invention, un procédé de pré-chargement de données, à partir d'un premier système de mémoire, vers un deuxième système de mémoire à accès plus rapide que le premier système de mémoire mais avantageusement à plus faible capacité de stockage que le premier système de mémoire, en fonction du type de fonctionnement d'un composant informatique d'une machine informatique déterminé ou du taux d'utilisation d'un microprocesseur déterminé, de préférence en associant respectivement aux types de fonctionnement d'un composant informatique d'une machine informatique déterminés ou aux gammes prédéterminées de taux d'utilisation d'un microprocesseur déterminées, des types prédéterminés de pré-chargement de données.

Ainsi, l'amélioration du procédé de détermination du type de fonctionnement d'un composant informatique d'une machine informatique ou du taux d'utilisation d'un microprocesseur se déroulant lors de l'exécution de ladite application informatique, permet d'obtenir une meilleure efficacité de pré-chargement de données, à partir d'un premier système de mémoire, vers un deuxième système de mémoire à accès plus rapide que le premier système de mémoire mais avantageusement à plus faible capacité de stockage que le premier système de mémoire, résultant en une amélioration du temps d'exécution d'une application informatique.

Selon l'invention, il est par ailleurs prévu un procédé de détermination du type de séquence temporelle d'accès mémoire à un système de fichiers, se déroulant lors d'une exécution d'une application informatique, comprenant : une estimation de la variation, au cours du temps, de la taille de la plage de lecture et/ou d'écriture en continu des blocs de données lus et/ou écrits lors de ladite exécution, une estimation de la variation, au cours du temps, du décalage de la position des blocs de données dans la zone mémoire où ils sont lus et/ou écrits lors de ladite exécution, une classification de la variation au cours du temps de ladite taille en deux catégories : taille plutôt croissante au cours du temps, ou bien taille plutôt constante au cours du temps, une classification de la variation au cours du temps dudit décalage en deux catégories : décalage plutôt aléatoire au cours du temps, ou bien décalage plutôt constant au cours du temps, une association d'un type prédéterminé de séquence temporelle d'accès mémoire à un couple desdites catégories : séquence temporelle d'accès mémoire de type séquentiel pour une taille plutôt croissante et pour un décalage plutôt constant, séquence temporelle d'accès mémoire de type aléatoire pour une taille plutôt constante et pour un décalage plutôt aléatoire, séquence temporelle d'accès mémoire de type motif pour une taille plutôt constante et pour un décalage plutôt constant, la séquence temporelle d'accès mémoire de type motif peut présenter un ou plusieurs motifs qui se répétent, dans le cas de plusieurs motifs, ce seraient quelques tailles chacune plutôt constante et quelques décalages chacun plutôt constant, une taille et un décalage par motif.

Ainsi, le choix optimisé de ces deux paramètres particuliers, ainsi que leur classification chacun dans deux catégories qui leur sont particulièrement bien adaptées, permet à lui seul déjà une première amélioration notable, quoique perfectible, du procédé de détermination du type de séquence temporelle d'accès mémoire à un système de fichiers, se déroulant lors d'une exécution d'une application informatique, tout en conservant une grande simplicité, liée au faible nombre de paramètres et au faible nombre de catégories associées à chacun des paramètres.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un ou l'autre des objets de l'invention précédemment cités.

De préférence, lesdits paramètres classifiés comprennent au moins, ou de préférence sont réduits seulement à : la variation temporelle de la taille de la plage de lecture et/ou d'écriture en continu des blocs de données lus et/ou écrits en mémoire, lors de ladite exécution, la variation temporelle du décalage de la position des blocs de données dans la zone mémoire où ils sont lus et/ou écrits, lors de ladite exécution.

Ainsi, ce jeu de paramètres est particulièrement bien représentatif et bien adapté pour améliorer le procédé de détermination du type de séquence temporelle d'accès mémoire, se déroulant lors d'une exécution d'une application informatique, à partir d'un jeu de plusieurs paramètres distincts représentatifs dudit type de séquence temporelle d'accès mémoire. Ces deux paramètres sont très utiles et même suffisants à eux seuls pour être représentatifs de la plupart des types de séquence temporelle d'accès mémoire généralement utilisés.

De préférence, la variation temporelle de la taille de la plage de lecture et/ou d'écriture en continu des blocs de données lus et/ou écrits en mémoire, lors de ladite exécution, peut être classifiée en au moins deux catégories, de préférence en seulement lesdites deux catégories, qui sont : taille plutôt croissante au cours du temps, ou bien taille plutôt constante au cours du temps, la variation temporelle du décalage de la position des blocs de données dans la zone mémoire où ils sont lus et/ou écrits, lors de ladite exécution, peut être classifiée en au moins deux catégories, de préférence en seulement lesdites deux catégories, qui sont : décalage plutôt aléatoire au cours du temps, ou bien décalage plutôt constant au cours du temps.

Ainsi, le choix optimisé de ces deux paramètres particuliers, ainsi que leur classification chacun dans deux catégories qui leur sont particulièrement bien adaptées, permet d'améliorer encore plus le procédé de détermination du type de séquence temporelle d'accès mémoire à un système de fichiers, se déroulant lors d'une exécution d'une application informatique, tout en conservant une grande simplicité, liée au faible nombre de paramètres et au faible nombre de catégories associées à chacun des paramètres.

De préférence, lesdits types prédéterminés de séquence temporelle d'accès mémoire comprennent au moins, ou de préférence sont réduits seulement à : séquence temporelle d'accès mémoire de type séquentiel pour une taille plutôt croissante et pour un décalage plutôt constant, séquence temporelle d'accès mémoire de type aléatoire pour une taille plutôt constante et pour un décalage plutôt aléatoire, séquence temporelle d'accès mémoire de type motif pour une ou plusieurs tailles plutôt constantes et pour un ou plusieurs décalages plutôt constants, avec une certaine périodicité de répétition pour la ou les tailles et pour le ou les décalages.

Ainsi, ces types prédéterminés de séquence temporelle d'accès mémoire correspondent à des fonctionnements suffisamment distincts du procédé de détermination du type de séquence temporelle d'accès mémoire, se déroulant lors d'une exécution d'une application informatique, à partir d'un jeu de plusieurs paramètres distincts représentatifs dudit taux d'utilisation, pour pouvoir être discriminés efficacement et simplement.

De préférence, pour ledit deuxième niveau de technique de regroupement, l'utilisateur fixe le nombre de groupes, et laisse libre le seuil de distance, et/ou de préférence le nombre de groupes vaut 3, et/ou de préférence ledit deuxième niveau de technique de regroupement est un algorithme « k-moyennes ».

Ainsi, le choix de fixer le nombre de groupes plutôt que le seuil de distance est ici particulièrement intéressant, car généralement, le nombre de types prédéterminés de séquence temporelle d'accès mémoire, pour une application informatique en cours d'exécution, est bien connu au départ.

De préférence, pour ledit premier niveau de technique de regroupement, l'utilisateur fixe le seuil de distance, et laisse libre le nombre de groupes, pour au moins un paramètre classifié, pour ledit premier niveau de technique de regroupement, l'utilisateur fixe le nombre de groupes, et laisse libre le seuil de distance, pour au moins un autre paramètre classifié, et/ou de préférence, pour ledit premier niveau de technique de regroupement, l'utilisateur fixe le seuil de distance, et laisse libre le nombre de groupes, lorsque le paramètre classifié est la variation temporelle de la taille de la plage de lecture et/ou d'écriture en continu des blocs de données lus et/ou écrits en mémoire, lors de ladite exécution, et/ou de préférence, pour ledit premier niveau de technique de regroupement, l'utilisateur fixe le nombre de groupes, et laisse libre le seuil de distance, lorsque le paramètre classifié est la variation temporelle du décalage de la position des blocs de données dans la zone mémoire où ils sont lus et/ou écrits lors de ladite exécution.

Ainsi, le choix de fixer soit le nombre de groupes plutôt que le seuil de distance, soit le seuil de distance plutôt que le nombre de groupes, peut alors être optimisé pour chaque paramètre séparément, ce qui augmente encore la précision et la fiabilité qui sont finalement obtenues.

Ainsi, le choix de fixer le seuil de distance plutôt que le nombre de groupes est ici particulièrement intéressant, pour la variation temporelle de la taille de la plage de lecture et/ou d'écriture en continu des blocs de données lus et/ou écrits en mémoire, lors de ladite exécution, car généralement, la valeur des distances considérées, représentatives des différentes tailles de plage de lecture et/ou d'écriture en continu des blocs de données lus et/ou écrits en mémoire, s'étend sur une dynamique importante, ce qui permet alors de maîtriser cette dynamique de distance, et d'éviter que l'effet des petites distances soit trop atténué ou même pratiquement supprimé lorsque ces petites distances sont comparées ou combinées aux grandes distances.

Ainsi, le choix de fixer le nombre de groupes plutôt que le seuil de distance est ici particulièrement intéressant, car généralement, le nombre de types prédéterminés de décalages de la position des blocs de données dans la zone mémoire où ils sont lus et/ou écrits lors de ladite exécution, pour une application informatique en cours d'exécution, est relativement bien connu au départ.

De préférence, la réalisation dudit premier niveau de technique de regroupement, qui fixe le seuil de distance et qui laisse libre le nombre de groupes, pour au moins un paramètre classifié, est précédée, pour ce paramètre classifié, par une opération de correspondance dynamique de déformation temporelle, laquelle opération de correspondance n'est avantageusement pas précédée d'une opération de normalisation.

Ainsi, l'ajout de cette opération de correspondance dynamique de déformation temporelle, plutôt que l'utilisation d'une simple distance euclidienne, permet d'une part de corriger les petits décalages temporels artificiels apparus entre des données à comparer entre elles, et d'autre part de réaliser cette correction sans rajouter une distorsion trop grande comme le ferait l'utilisation de la simple distance euclidienne. En cas de décalages temporels artificiels notables, l'utilisation d'une opération de normalisation, sans les avoir corrigés, risque sinon de les amplifier ou du moins d'amplifier leurs effets.

De préférence, la première classification et la deuxième classification sont réalisées en temps réel.

Ainsi, le procédé de détermination du type de séquence temporelle d'accès mémoire peut fonctionner en temps réel, ce qui améliore sa rapidité et son efficacité pour des applications informatiques s'exécutant très rapidement.

De préférence, lesdites catégories ne sont pas prédéterminées ou ne sont pas toutes prédéterminées.

Ainsi, le procédé de détermination du type de séquence temporelle d'accès mémoire peut fonctionner, lorsque les fonctionnements des types de séquence temporelle d'accès mémoire ne sont pas complètement prévisibles ou maîtrisés.

De préférence, ladite application informatique se déroule, au moins à certains moments, sur plus de 1000 nœuds d'un même réseau informatique, de préférence sur plus de 5000 nœuds d'un même réseau informatique.

Ainsi, le procédé de détermination du type de séquence temporelle d'accès mémoire peut fonctionner même à l'échelle d'un super calculateur, à l'échelle d'un cluster haute performance (HPC pour « high performance cluster » en langue anglaise).

De préférence, la mémoire utilisée par ladite application informatique lors de son exécution est un système de fichiers distribué, avantageusement le système de fichiers distribué « Lustre ».

Ainsi, l'utilisation du système de fichiers distribué, permettant pour les applications gourmandes en ressources, un accès très parallélisé aux données stockées, permet alors de démultiplier l'efficacité de l'invention, car elle va permettre de réduire nettement le temps d'accès mémoire pour un accès mémoire déjà rapide car parallélisé.

De préférence, ladite application informatique tourne sur au moins plusieurs centaines de processus d'un ensemble de nœuds de calcul d'un même réseau, de préférence sur au moins plusieurs milliers de ces processus, encore plus de préférence sur au moins plusieurs dizaines de milliers de ces processus, ladite application accède à plusieurs centaines de fichiers depuis un même processus.

Ainsi, le procédé de détermination du type de séquence temporelle d'accès mémoire peut fonctionner même à l'échelle d'un super calculateur, à l'échelle d'un cluster haute performance (HPC pour « high performance cluster » en langue anglaise).

De préférence, avant ladite première classification, est réalisée une estimation de la variation temporelle dudit paramètre, de préférence par l'intermédiaire d'un outil de collecte qui est un démon, c'est-à-dire une application qui tourne en permanence et en arrière-plan.

Ainsi, les données de variation temporelle des paramètres sont collectées de manière complète et actualisées en permanence, ce qui améliore encore l'efficacité du procédé de détermination du type de séquence temporelle d'accès mémoire qui utilise ensuite ces données collectées.

De préférence, lesdites variations temporelles de ladite première classification s'étendent sur un intervalle de temps prédéterminé, de préférence inférieur à 1 minute, encore plus de préférence valant environ 20 secondes, et/ou lesdites variations temporelles servant à ladite première classification sont comprises entre 10 et 100 valeurs temporelles prises par lesdits paramètres, de préférence entre 20 et 50 valeurs temporelles prises par lesdits paramètres, et/ou lesdites variations temporelles de ladite première classification sont réalisées toutes les secondes.

Ainsi, ces plages de nombres de données collectées pour un intervalle considéré, sont optimisées en termes de compromis entre d'une part efficacité du résultat obtenu et d'autre part temps et énergie nécessaires pour réaliser cette collecte de données d'entrée pour le procédé de détermination du type de séquence temporelle d'accès mémoire.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

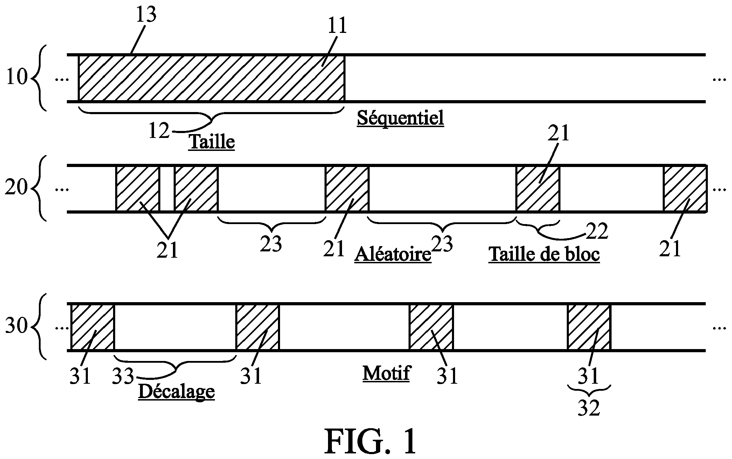

La figure 1 représente schématiquement un exemple de plusieurs types de séquence temporelle d'accès mémoire à un système de fichiers pouvant être déterminés par le procédé de détermination selon un mode de réalisation de l'invention.

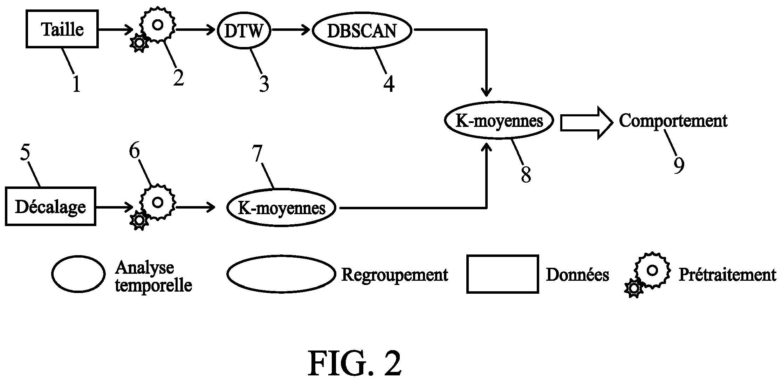

La figure 2 représente schématiquement un exemple de déroulement des principales étapes du procédé de détermination selon un mode de réalisation de l'invention.

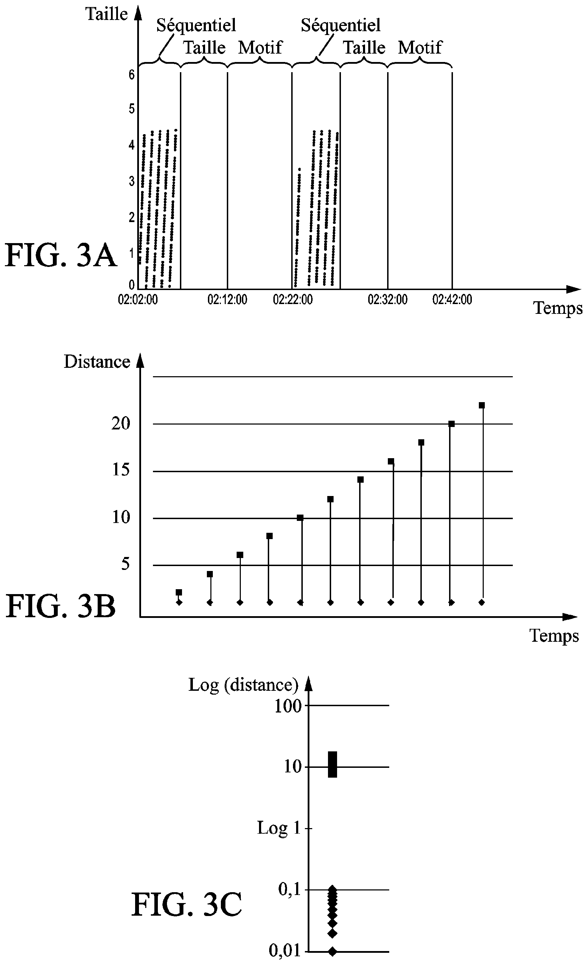

La figure 3A représente schématiquement un exemple d'évolution au cours du temps de la taille de la plage de lecture et/ou d'écriture des blocs de données lus et/ou écrits lors de l'exécution de l'application informatique pendant le déroulement du procédé de détermination selon un mode de réalisation de l'invention.
La figure 3B représente schématiquement un exemple d'évolution au cours du temps, de la distance avec une droite constante, pour la taille de la plage de lecture et/ou d'écriture des blocs de données lus et/ou écrits lors de l'exécution de l'application informatique pendant le déroulement du procédé de détermination selon un mode de réalisation de l'invention, correspondant au résultat de l'étape 3 de la figure 2.
La figure 3C représente schématiquement un exemple de regroupement effectué, pour la taille de la plage de lecture et/ou d'écriture des blocs de données lus et/ou écrits lors de l'exécution de l'application informatique pendant le déroulement du procédé de détermination selon un mode de réalisation de l'invention, correspondant au résultat de l'étape 4 de la figure 2.

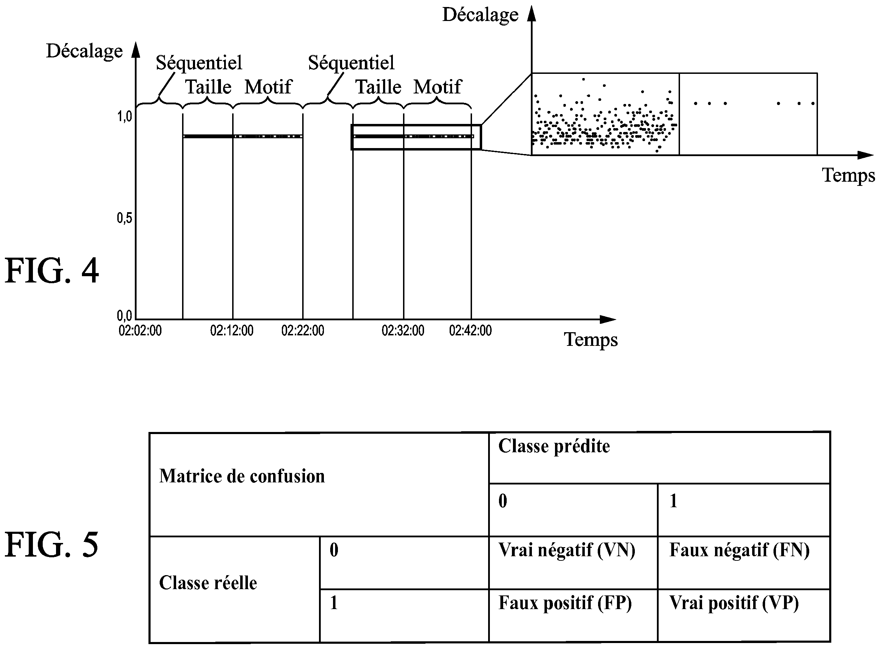

La figure 4 représente schématiquement un exemple d'évolution au cours du temps du décalage de la position des blocs de données dans la zone mémoire où ils sont lus et/ou écrits lors de l'exécution de l'application informatique pendant le déroulement du procédé de détermination selon un mode de réalisation de l'invention, la partie droite de la figure 4 correspondant à un agrandissement de la partie gauche de la figure 4.
La figure 5 représente schématiquement un exemple de matrice de confusion permettant d'évaluer les performances du procédé de détermination selon un mode de réalisation de l'invention.

### DESCRIPTION DETAILLEE DE L'INVENTION

La figure 1 représente schématiquement un exemple de plusieurs types de séquence temporelle d'accès mémoire à un système de fichiers pouvant être déterminés par le procédé de détermination selon un mode de réalisation de l'invention.

La séquence temporelle d'accès mémoire peut être par exemple soit de type séquentiel 10, soit de type aléatoire 20, soit de type motif 30 ou par motif 30. Supposons par exemple que la figure 1 représente les différents modes d'écriture. Chaque «grand» bloc 11 représente alors l'écriture de plusieurs blocs élémentaires. Les blocs 21 et 31, représentent alors chacun l'écriture d'un bloc élémentaire. Ces blocs 11, 21 et 31, sont respectivement chacun une partie de fichier.

Une séquence temporelle d'accès mémoire de type séquentiel 10 comprend la lecture et/ou l'écriture d'un ou de plusieurs blocs de données 11 de taille globale 12 et de décalage 13 entre les blocs 11. La taille 12 est croissante en continu et le décalage 13 est nul car les blocs 11 sont lus et/ou écrits les uns à la suite des autres sans espace entre eux. Le mode séquentiel 10 écrit les blocs 11 les uns à la suite des autres. D'un point de vue applicatif, une lecture en séquentiel signifie que l'application lit un fichier du début à la fin de manière linéaire.

Une séquence temporelle d'accès mémoire de type aléatoire 20 comprend la lecture et/ou l'écriture d'un ou de plusieurs blocs de données 21 de taille 22 et de décalage 23 entre les blocs 21. La taille 22 est constante et le décalage 13 est aléatoire. Le mode aléatoire 20 écrit les blocs 21 de manière aléatoire dans le système de fichiers.

Une séquence temporelle d'accès mémoire de type motif 30 comprend la lecture et/ou l'écriture d'un ou de plusieurs blocs de données 31 de taille 32 et de décalage 33 entre les blocs 31. La taille 32 est constante et le décalage 33 est également constant. Le mode par motif 30 écrit avec un motif, c'est-à-dire qu'il écrit des blocs 31 avec une distance régulière entre eux.

Donc, il suffit de déterminer à la fois la taille des blocs et le décalage entre blocs pour pouvoir discriminer entre le type séquentiel 10, ou bien le type aléatoire 20 ou bien encore le type motif 30, pour les séquences temporelles d'accès mémoire.

Les opérations vont ainsi être caractérisées selon une caractéristique qui est le type d'accès au fichier. En effet, les applications, selon la manière dont elles sont codées, peuvent alors accéder de trois façons à leurs fichiers : soit de façon séquentielle 10, soit de façon aléatoire 20, soit par motif 30 (« pattern » ou « stride » ou langue anglaise).

Ces différents types d'accès à des fichiers se caractérisent par deux données : la taille de blocs contigus qui est la plus grande plage d'écriture en continu sur le système de fichiers, ainsi que le décalage entre blocs qui est la distance entre le bloc écrit à l'instant t et celui à l'instant t+1.

La discrimination entre les différents types d'accès mémoire est donc réalisée en déterminant leur taille de bloc et leur décalage entre blocs.

Pour une séquence temporelle d'accès mémoire de type séquentiel 10, la taille 12 de blocs 11 contigus est supérieure et souvent bien supérieure à la taille d'un bloc 11 (par exemple, de quelques dizaines à quelques centaines de blocs 11 écrits en continu) et le décalage 13 entre blocs 11 est nul (en effet, l'écriture se fait de manière continue donc sans décalage).

Pour une séquence temporelle d'accès mémoire de type aléatoire 20, la taille 22 est égale à la taille d'un bloc 21 et le décalage 23 est aléatoire.

Pour une séquence temporelle d'accès mémoire de type motif 30, la taille 32 est égale à la taille d'un bloc 31 et le décalage 33 est régulier.

Cette caractérisation des écritures permet de mettre en place des accélérateurs particuliers. Dans le cas où le procédé de détermination détermine un comportement séquentiel 10, la méthode associée d'amélioration du temps d'exécution peut décider de charger le fichier entier en cache pour permettre un accès rapide. Il en est de même pour un accès par motif 30 où la méthode associée d'amélioration du temps d'exécution décide de charger les n prochaines occurrences avec le motif repéré pour accélérer le chargement. Pour un comportement aléatoire 20, il peut être décidé de ne rien charger en avance, la place du prochain bloc à lire étant imprévisible.

Le procédé de détermination du type de séquence temporelle d'accès mémoire peut également être utilisé pour choisir sur quel système fonctionnera l'application. En effet, l'utilisation de disques durs haute performance de type SSD (SSD pour « Solid State Drive » en langue anglaise) par exemple permet une accélération de l'application pour tous les types de de séquence temporelle d'accès mémoire. Mais ce type de mémoire étant coûteux, le procédé de détermination du type de séquence temporelle d'accès mémoire peut donc le choisir seulement dans le cas où le type de séquence temporelle d'accès mémoire est aléatoire 20, son coût étant alors compensé par sa vélocité, la stratégie de pré-chargement ne pouvant pas vraiment améliorer dans ce cas la rapidité de lecture des données en mémoire.

La figure 2 représente schématiquement un exemple de déroulement des principales étapes du procédé de détermination selon un mode de réalisation de l'invention. La mémoire utilisée par l'application informatique lors de son exécution est un système de fichiers distribué « Lustre ».

En entrée, il y a deux paramètres, d'une part la taille 1 de blocs contigus lus et/ou écris en mémoire, et d'autre part le décalage 5 entre blocs lus et/ou écris en mémoire. En sortie, il y a un comportement 9 de lecture et/ou d'écriture auquel peut directement être associé un type de séquence temporelle d'accès mémoire : le comportement 9 peut donc être par exemple soit séquentiel, soit aléatoire, soit par motif.

Les deux paramètres que sont la taille 1 et le décalage 5 sont d'abord traités séparément, puis rassemblés ensuite. D'abord, la taille 1 passe successivement par une étape 2 de prétraitement, par une étape 3 d'analyse temporelle, par une étape 4 de premier niveau de regroupement. En parallèle, le décalage 5 passe successivement par une étape 6 de prétraitement, par une étape 7 de premier niveau de regroupement. Les couples de catégories, respectivement obtenues par les premiers niveaux de regroupement appliqués à la taille 1 et au décalage 5, font l'objet d'une étape 8 de deuxième niveau de regroupement.

Les paramètres classifiés sont réduits seulement à deux paramètres qui sont d'une part la variation temporelle de la taille 1 de la plage de lecture et/ou d'écriture en continu des blocs de données lus et/ou écrits en mémoire, lors de ladite exécution, et d'autre part la variation temporelle du décalage 5 de la position des blocs de données dans la zone mémoire où ils sont lus et/ou écrits, lors de ladite exécution. Sur chacun de ces paramètres, taille 1 et décalage 5, sont respectivement appliquées des étapes de prétraitement 2 et 6, relativement usuelles en traitement de signal.

Après l'étape 2 de prétraitement de la taille 1, est encore appliquée à cette taille 1, une étape d'analyse temporelle 3 réalisant une opération de correspondance dynamique de déformation temporelle par exemple de type DTW (DTW pour « Dynamic Time Warping »), laquelle opération de correspondance n'est pas précédée d'une opération de normalisation.

Après l'étape d'analyse temporelle 3 de la taille 1, est encore appliquée à cette taille 1, une étape 4 de premier niveau de regroupement par exemple de type DBSCAN (DBSCAN pour « Density Based Spatial Clustering of Applications with Noise » en langue anglaise). Dans cette étape 4 de premier niveau de regroupement, l'utilisateur fixe le seuil de distance, et laisse libre le nombre de groupes, pour la variation temporelle de la taille de la plage de lecture et/ou d'écriture en continu des blocs de données lus et/ou écrits en mémoire, lors de l'exécution de l'application informatique. Dans cette étape 4, les éléments à regrouper sont les variations temporelles de la taille 1 qui s'étendent sur un intervalle de temps prédéterminé, valant environ 20 secondes, avec une variation temporelle toutes les secondes. Ce temps d'analyse, du comportement 9 de l'application ainsi que des variations temporelles de la taille 1, sur les 20 dernières secondes, constitue un bon compromis pour effectuer l'étape d'analyse temporelle 3 tout en évitant d'être trop influencé par le bruit.

Le résultat de cette étape 4 est la classification de la variation temporelle de la taille 1 de la plage de lecture et/ou d'écriture en continu des blocs de données lus et/ou écrits en mémoire, lors de ladite exécution, en seulement deux catégories, qui sont d'une part la taille plutôt croissante au cours du temps, ou bien d'autre part la taille plutôt constante au cours du temps.

Après l'étape 6 de prétraitement du décalage 5, est encore appliquée à ce décalage 5, une étape 7 de premier niveau de regroupement par exemple de type « k-moyennes » (« k-means » en langue anglaise). Dans cette étape 7 de premier niveau de regroupement, l'utilisateur fixe le nombre de groupes, et laisse libre le seuil de distance, pour la variation temporelle du décalage de la position des blocs de données dans la zone mémoire où ils sont lus et/ou écrits lors de l'exécution de l'application informatique. Dans cette étape 7, les éléments à regrouper sont les variations temporelles du décalage 5 qui s'étendent sur un intervalle de temps prédéterminé, valant environ 20 secondes, avec une variation temporelle toutes les secondes.

Le résultat de cette étape 7 est la classification de la variation temporelle du décalage 5 de la position des blocs de données dans la zone mémoire où ils sont lus et/ou écrits, lors de ladite exécution, peut être classifiée en seulement deux catégories, qui sont d'une part un décalage plutôt aléatoire au cours du temps, ou bien d'autre part un décalage plutôt constant au cours du temps.

Ensuite, lors d'une étape 8, est réalisé un deuxième niveau de regroupement en plusieurs groupes distincts par minimisation de distance entre les éléments d'un même groupe, dont lesdits éléments sont des jeux de catégories données pour les couples formés par la taille 1 et le décalage 5, respectivement obtenus à l'issue des étapes 4 et 7. Lors de cette étape 8 de deuxième niveau de technique de regroupement, l'utilisateur fixe le nombre de groupes à la valeur de 3, laisse libre le seuil de distance, utilisant un algorithme « k-moyennes ». Le résultat de l'étape 8 est la classification de ces jeux de catégories données, deux pour la taille 1 croisés avec deux pour le décalage 5, en l'un des trois types prédéterminés de séquence temporelle d'accès mémoire qui sont réduits seulement à : soit une séquence temporelle 10 d'accès mémoire de type séquentiel pour une taille 1 plutôt croissante et pour un décalage 5 plutôt constant, soit une séquence temporelle 20 d'accès mémoire de type aléatoire pour une taille 1 plutôt constante et pour un décalage 5 plutôt aléatoire, soit une séquence temporelle 30 d'accès mémoire de type motif pour une ou plusieurs tailles 1 plutôt constantes et pour un ou plusieurs décalages 5 plutôt constants, avec une certaine périodicité de répétition pour la ou les tailles 1 et pour le ou les décalages 5.

Plus précisément, l'étape 8 de deuxième niveau de regroupement, va permettre de catégoriser le type d'accès selon deux critères, taille 1 et décalage 5, ce qui est résumé dans le tableau suivant :

**TABLEAU**

| | | | |
|---|---|---|---|
| Taille 1 | Taille 1 | Décalage 5 | Décalage 5 |
| Séquentiel (A) | Motif/Aléatoire (B) | Aléatoire (C) | Séquentiel/Motif (D) |

En analysant ce tableau précédent, il peut être constaté qu'aucun des deux critères, taille 1 ou décalage 5, ne permet, à lui seul, de caractériser les trois comportements 9 possibles ensemble. C'est donc cette dernière étape 8 qui va permettre de discriminer entre eux les trois comportements 9 possibles, à savoir séquentiel, aléatoire ou par motif.

L'algorithme des « k-moyennes » va être utilisé. La correspondance est effectuée de la manière suivante. Le comportement 9 séquentiel correspond à une taille 1 de type séquentiel (A) et à un décalage 5 de type séquentiel/motif (D). Le comportement 9 aléatoire correspond à une taille 1 de type motif/aléatoire (B) et à un décalage 5 de type aléatoire (C). Le comportement 9 motif correspond à une taille 1 de type motif/aléatoire (B) et à un décalage 5 de type séquentiel/motif (D). En considérant les numéros de groupes attribués à chaque type de comportements (lettre entre parenthèses dans le tableau), les données deviennent A-D pour le comportement 9 séquentiel, B-C pour le comportement 9 aléatoire, B-D pour le comportement 9 motif. De prime abord, cette étape 8 de deuxième niveau de regroupement pourrait apparaître comme un peu superflue, car les données semblent naturellement réparties en 3 groupes (« clusters » en langue anglaise), mais malgré les étapes de prétraitement 2 et 6 réalisées pour nettoyer les données, le bruit peut engendrer des groupes non prévus (par exemple A-C, ce qui indiquerait un comportement 9 qui serait alors à la fois séquentiel et aléatoire, ce qui ne correspond pas à la réalité de l'exécution d'une application informatique. Cette étape 8 permet alors de rassembler correctement ces groupes imprévus pour aboutir à déterminer un comportement 9 qui soit fiable.

La figure 3A représente schématiquement un exemple d'évolution au cours du temps de la taille de la plage de lecture et/ou d'écriture des blocs de données lus et/ou écrits lors de l'exécution de l'application informatique pendant le déroulement du procédé de détermination selon un mode de réalisation de l'invention.

Les étapes 2 et 6 de prétraitement ont pour effet de découper les données par couple ([PID, FILE, R/W] dans le système de fichiers « Lustre », « Lustre » étant une marque déposée), c'est-à-dire le numéro du processus qui fait l'action (PID) avec le fichier qui est utilisé (FILE), en indiquant également si c'est une opération de lecture ou d'écriture (R/W correspondant à « Read/Write » en langue anglaise), et de créer les intervalles de temps de 20 secondes pour l'analyse ultérieure du comportement 9.

La taille des blocs contigus lus et/ou écrits est représentée en fonction du temps. Dans l'exemple représenté, se succèdent plusieurs types de séquence temporelle d'accès mémoire, sous forme d'un cycle comprenant une séquence d'accès mémoire de type séquentiel, une séquence d'accès mémoire de type aléatoire, une séquence d'accès mémoire de type motif. Pour la séquence d'accès mémoire de type séquentiel, la taille de blocs contigus est d'une part en croissance constante et d'autre part d'une valeur élevée, comme le montrent les nombreuses rangées de points montantes et légèrement obliques, tandis que pour la séquence d'accès mémoire de type aléatoire et la séquence d'accès mémoire de type motif, cette taille est d'une part constante et d'autre part d'une valeur bien plus faible, comme le montrent les points pratiquement confondus avec l'axe horizontal des abscisses. La taille ne permet donc de caractériser que le comportement séquentiel, mais ne permet pas de discriminer entre les comportements aléatoire et motif.

Les rectangles verticaux qui se succèdent de gauche à droite correspondent à différents types de comportement, ici successivement séquentiel, aléatoire et motif. Les points indiquent les événements de lecture ou d'écriture qui ont eu lieu.

La figure 3B représente schématiquement un exemple d'évolution au cours du temps, de la distance avec une droite constante, pour la taille de la plage de lecture et/ou d'écriture des blocs de données lus et/ou écrits lors de l'exécution de l'application informatique pendant le déroulement du procédé de détermination selon un mode de réalisation de l'invention, correspondant au résultat de l'étape 3 de la figure 2.

Le but de l'étape 3 d'analyse temporelle est de caractériser la forme de la courbe. Le système compare la courbe obtenue sur les 20 dernières secondes à une droite constante horizontale. Il enregistre la distance entre les deux courbes. Cela permet d'obtenir deux groupes de données. Les accès mémoire aléatoire et motif ont une distance de 0 avec la droite constante, tandis que l'accès mémoire séquentiel a une distance notable, ici d'environ 20, avec la droite constante.

La figure 3C représente schématiquement un exemple de regroupement effectué, pour la taille de la plage de lecture et/ou d'écriture des blocs de données lus et/ou écrits lors de l'exécution de l'application informatique pendant le déroulement du procédé de détermination selon un mode de réalisation de l'invention, correspondant au résultat de l'étape 4 de la figure 2.

L'étape de regroupement est utilisée pour mettre en évidence les deux groupes de données. Elle utilise l'algorithme de DBSCAN à l'étape 4, car les données ne sont pas obligatoirement bien séparées, ce qui sinon pourrait entrainer un mauvais regroupement et donc une mauvaise détection du système. La figure 3C présente les données obtenues. Pour permettre à l'étape de regroupement d'avoir des résultats optimaux, le modèle utilise un logarithme en base 10 des distances (en prenant soin d'éviter de calculer log 0). Cette étape permet donc de séparer le comportement séquentiel, correspondant à un pavé autour de 10, des comportements aléatoire ou motif, s'étalant entre 0.01 et 0.1.

La figure 4 représente schématiquement un exemple d'évolution au cours du temps du décalage de la position des blocs de données dans la zone mémoire où ils sont lus et/ou écrits lors de l'exécution de l'application informatique pendant le déroulement du procédé de détermination selon un mode de réalisation de l'invention, la partie droite de la figure 4 correspondant à un agrandissement de la partie gauche de la figure 4.

Le décalage entre blocs lus et/ou écrits est représenté en fonction du temps. Dans l'exemple représenté, se succèdent plusieurs types de séquence temporelle d'accès mémoire, sous forme d'un cycle comprenant une séquence d'accès mémoire de type séquentiel, une séquence d'accès mémoire de type aléatoire, une séquence d'accès mémoire de type motif. Pour faire l'analyse de ces données, le système compte le nombre de valeurs différentes dans les 20 dernières secondes. Il y a ensuite une étape de regroupement, utilisant l'algorithme « k-moyennes », pour différencier les deux groupes. Pour la séquence d'accès mémoire de type séquentiel, le décalage entre blocs est nul, comme le montrent les points pratiquement confondus avec l'axe horizontal des abscisses, tandis que pour la séquence d'accès mémoire de type aléatoire et la séquence d'accès mémoire de type motif, cette taille est d'une valeur distincte de zéro, comme le montrent les points horizontaux situés bien au-dessus de l'axe horizontal des abscisses. Le décalage entre blocs est bien variable pour le comportement aléatoire, tandis qu'il est constant pour le comportement motif, ce qui permet de discriminer entre les comportements aléatoire et motif. Toutefois, il n'est pas facile de distinguer entre un décalage constant et nul (comportement séquentiel) et un décalage constant et non nul (comportement motif). Par conséquent, le décalage entre blocs ne permet donc de caractériser que le comportement aléatoire, mais ne permet pas de discriminer entre les comportements séquentiel et motif. Par conséquent, c'est en utilisant à la fois la taille entre blocs contigus et le décalage entre blocs, que l'on peut donc discriminer entre eux les trois comportements suivants : séquentiel, aléatoire et motif.

La figure 5 représente schématiquement un exemple de matrice de confusion permettant d'évaluer les performances du procédé de détermination selon un mode de réalisation de l'invention.

Cette étape de validation est intéressante car elle permet d'évaluer les performances du procédé de détermination proposé par l'invention. Elle permet d'évaluer la viabilité du modèle utilisé. Elle permet aussi d'affiner les caractéristiques du modèle, comme le nombre de groupes, le rayon de convergence, etc ...

Pour réaliser cette étape de validation, plusieurs applications ont été utilisées, comme « FakeApp » qui réalise un comportement de type motif, séquentiel ou aléatoire, de manière déterministe, ou encore l'application NEMO (NEMO for « Nucleus for European Modelling of the Océan ») qui est application océanographique permet de calculer en trois dimensions l'état et l'évolution des océans.

L'utilisation de ces deux applications a pour but de former deux jeux de données :
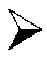 le premier avec « FakeApp » est un jeu de données labélisé, où à chaque instant le modèle sait quel comportement est en cours,
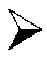 le deuxième avec NEMO, utilisé comme base de test, permet de tester le modèle dans un environnement réel.

Les données de test représentent une durée de 2 heures de test incluant 20 minutes de motif, 52 minutes d'aléatoire, et 50 minutes de séquentiel.

Le modèle a été testé en utilisant « seulement » 5 nœuds de calcul. Bien que cela ne représente pas le nombre de nœuds d'une application réelle (plus proche de quelques centaines ou de quelques milliers), les résultats obtenus sont généralisables de manière fiable.

En effet, les données sont découpées par intervalle de 20 secondes et par item (un item est un fichier accédé d'une manière par un processus). Ceci permet d'être indépendant du nombre de nœuds pour l'exploitation des résultats. Les temps de calcul évoluent de manière linéaire, il est donc possible d'extrapoler ces temps sur un cluster de taille normale. Enfin, le modèle est calculé sur un nœud avec 8 cœurs et 24 GO de RAM. Il est parallélisé, il utilise donc les 8 cœurs d'exécution, et prend environ 2 GO en RAM.

La première étape est la validation du modèle. Elle se déroule sur les données labélisées. Grâce à cette labélisation, il est possible de noter le modèle sur sa performance. Pour noter le modèle, il existe plusieurs métriques. Une des plus simples à utiliser est la matrice de confusion. Elle prend la forme suivante :
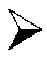 un VP est un élément de la classe 1 correctement prédit,
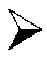 un VN est un élément de la classe 0 correctement prédit,
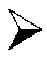 un FP est un élément de la classe 1 faussement prédit,
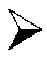 un FN est un élément de la classe 0 faussement prédit.

De cette matrice, découlent deux métriques de performances :
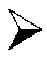 la précision qui décrit le nombre d'éléments bien classés pour une classe et qui vaut VP/(VP + FP),
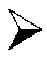 le rappel qui décrit en fait le nombre d'éléments bien classé pour une classe par rapport au nombre d'éléments total de la classe et qui vaut VP/(VP + FN).

Ces deux métriques permettent de pouvoir noter le modèle proposé, ainsi que d'améliorer itérativement les performances.

Sur les données de test, les résultats obtenus sont les suivants :
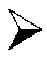 pour un comportement motif : 100% de précision et 98% de rappel,
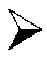 pour un comportement séquentiel : 95.3% de précision et 100% de rappel,
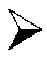 pour un comportement aléatoire : 100% de précision et 96% de rappel,
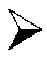 ce qui donne en moyenne pour le modèle proposé par l'invention une précision de 98,4% et un rappel de 98%, sur les données de test.

Ce modèle non-supervisé « apprend » sur les données de test, c'est-à-dire qu'il crée les groupes représentant les différents comportements à partir des données de test. Cela permet d'être précis dans la construction, car ces données sont normalement non bruitées et très caractéristiques. L'apprentissage peut bien sûr se faire directement en phase de production avec une application réelle. La seule condition est d'avoir assez de points pour former des groupes caractéristiques. Sur cette phase d'apprentissage, le modèle prend environ 8 secondes pour construire les groupes à partir des données présentes sur la base de données.

La vérification avec NEMO, utilisé comme base de test, permet de confirmer, dans une bonne mesure, les très bons résultats obtenus avec le modèle dans un environnement réel, c'est-à-dire qu'elle permet de confirmer la viabilité et la fiabilité du procédé de détermination du type de séquence temporelle d'accès mémoire proposé par l'invention.

Bien entendu, la présente invention n'est pas limitée aux exemples et au mode de réalisation décrits et représentés, mais elle est susceptible de nombreuses variantes accessibles à l'homme de l'art.

## Revendications

1. Procédé de détermination du type de séquence temporelle d'accès mémoire, se déroulant lors d'une exécution d'une application informatique, à partir d'un jeu de plusieurs paramètres (1, 5) distincts de lecture et/ou d'écriture des blocs (11, 21, 31) de données en mémoire, comprenant :
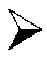 d'abord, pour chaque paramètre parmi au moins deux paramètres distincts (1, 5) dudit jeu de paramètres, une première classification dudit paramètre, parmi plusieurs catégories distinctes entre elles, éventuellement différentes entre paramètres,
∘ qui est réalisée par un premier niveau de technique de regroupement (4, 7) en plusieurs groupes distincts par minimisation de distance entre les éléments d'un même groupe,
∘ dont lesdits éléments sont des variations temporelles dudit paramètre,
∘ résultant en la classification dudit paramètre dans une catégorie donnée à un moment donné,
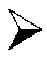 ensuite, une deuxième classification de l'ensemble dudit jeu de paramètres classifiés, parmi plusieurs types prédéterminés de séquence temporelle d'accès mémoire (9, 10, 20, 30), distincts entre eux,
∘ qui est réalisée par un deuxième niveau de technique de regroupement (8) en plusieurs groupes distincts par minimisation de distance entre les éléments d'un même groupe,
∘ dont lesdits éléments sont des jeux de catégories données correspondant audit jeu de paramètres classifiés à différents moments donnés,
∘ résultant en la classification dudit jeu de paramètres classifiés dans un type prédéterminé (9, 10, 20, 30) de séquence temporelle d'accès mémoire donné à un moment donné.

2. Procédé de détermination du type de séquence temporelle d'accès mémoire selon la revendication 1, **caractérisé en ce que** :
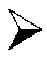 lesdits paramètres classifiés (1, 5) comprennent au moins, ou de préférence sont réduits seulement à :
∘ la variation temporelle de la taille (1) de la plage de lecture et/ou d'écriture en continu des blocs (11, 21, 31) de données lus et/ou écrits en mémoire, lors de ladite exécution,
∘ la variation temporelle du décalage (5) de la position des blocs (11, 21, 31) de données dans la zone mémoire où ils sont lus et/ou écrits, lors de ladite exécution.

3. Procédé de détermination du type de séquence temporelle d'accès mémoire selon la revendication 2, **caractérisé en ce que** :
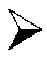 la variation temporelle de la taille (1) de la plage de lecture et/ou d'écriture en continu des blocs (11, 21, 31) de données lus et/ou écrits en mémoire, lors de ladite exécution, peut être classifiée en au moins deux catégories, de préférence en seulement lesdites deux catégories, qui sont :
∘ taille (1) plutôt croissante au cours du temps,
∘ ou bien taille (1) plutôt constante au cours du temps,
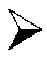 la variation temporelle du décalage (5) de la position des blocs (11, 21, 31) de données dans la zone mémoire où ils sont lus et/ou écrits, lors de ladite exécution, peut être classifiée en au moins deux catégories, de préférence en seulement lesdites deux catégories, qui sont :
∘ décalage (5) plutôt aléatoire au cours du temps,
∘ ou bien décalage (5) plutôt constant au cours du temps.

4. Procédé de détermination du type de séquence temporelle d'accès mémoire selon l'une quelconque des revendications précédentes, **caractérisé en ce que** :
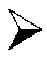 lesdits types prédéterminés (9, 10, 20, 30) de séquence temporelle
d'accès mémoire comprennent au moins, ou de préférence sont réduits seulement à :
∘ séquence temporelle d'accès mémoire de type séquentiel (10) pour une taille (1) plutôt croissante et pour un décalage (5) plutôt constant,
∘ séquence temporelle d'accès mémoire de type aléatoire (20) pour une taille (1) plutôt constante et pour un décalage (5) plutôt aléatoire,
∘ séquence temporelle d'accès mémoire de type motif (30) pour une ou plusieurs tailles (1) plutôt constantes et pour un ou plusieurs décalages (5) plutôt constants, avec une certaine périodicité de répétition pour la ou les tailles (1) et pour le ou les décalages (5).

5. Procédé de détermination du type de séquence temporelle d'accès mémoire selon l'une quelconque des revendications précédentes, **caractérisé en ce que** : 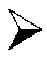 pour ledit deuxième niveau de technique de regroupement (8),
l'utilisateur fixe le nombre de groupes, et laisse libre le seuil de distance,
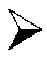 et/ou de préférence le nombre de groupes vaut 3,
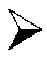 et/ou de préférence ledit deuxième niveau de technique de regroupement (8) est un algorithme « k-moyennes ».

6. Procédé de détermination du type de séquence temporelle d'accès mémoire selon l'une quelconque des revendications précédentes, **caractérisé en ce que** :
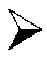 pour ledit premier niveau de technique de regroupement (4, 7), l'utilisateur fixe le seuil de distance, et laisse libre le nombre de groupes, pour au moins un paramètre classifié (1, 5),
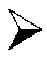 pour ledit premier niveau de technique de regroupement (4, 7), l'utilisateur fixe le nombre de groupes, et laisse libre le seuil de distance, pour au moins un autre paramètre classifié (1, 5),
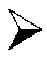 et/ou de préférence, pour ledit premier niveau de technique de regroupement (4), l'utilisateur fixe le seuil de distance, et laisse libre le nombre de groupes, lorsque le paramètre classifié est la variation temporelle de la taille (1) de la plage de lecture et/ou d'écriture en continu des blocs (11, 21, 31) de données lus et/ou écrits en mémoire, lors de ladite exécution,
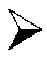 et/ou de préférence, pour ledit premier niveau de technique de regroupement (7), l'utilisateur fixe le nombre de groupes, et laisse libre le seuil de distance, lorsque le paramètre classifié est la variation temporelle du décalage (5) de la position des blocs (11, 21, 31) de données dans la zone mémoire où ils sont lus et/ou écrits lors de ladite exécution.

7. Procédé de détermination du type de séquence temporelle d'accès mémoire selon la revendication 6, **caractérisé en ce que** la réalisation dudit premier niveau de technique de regroupement (4, 7), qui fixe le seuil de distance et qui laisse libre le nombre de groupes, pour au moins un paramètre classifié (1, 5), est précédée, pour ce paramètre classifié (1, 5), par une opération de correspondance dynamique de déformation temporelle (3), laquelle opération de correspondance (3) n'est avantageusement pas précédée d'une opération de normalisation.

8. Procédé de détermination du type de séquence temporelle d'accès mémoire selon l'une quelconque des revendications précédentes, **caractérisé en ce que** la première classification et la deuxième classification sont réalisées en temps réel.

9. Procédé de détermination du type de séquence temporelle d'accès mémoire selon l'une quelconque des revendications précédentes, **caractérisé en ce que** lesdites catégories ne sont pas prédéterminées ou ne sont pas toutes prédéterminées.

10. Procédé de détermination du type de séquence temporelle d'accès mémoire selon l'une quelconque des revendications précédentes,
**caractérisé en ce que** ladite application informatique se déroule, au moins à certains moments, sur plus de 1000 nœuds d'un même réseau informatique, de préférence sur plus de 5000 nœuds d'un même réseau informatique
et/ou **en ce que** :
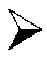 ladite application informatique tourne sur au moins plusieurs centaines de processus d'un ensemble de nœuds de calcul d'un même réseau, de préférence sur au moins plusieurs milliers de ces processus, encore plus de préférence sur au moins plusieurs dizaines de milliers de ces processus,
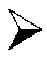 ladite application accède à plusieurs centaines de fichiers depuis un même processus.

11. Procédé de détermination du type de séquence temporelle d'accès mémoire selon l'une quelconque des revendications précédentes, **caractérisé en ce que** la mémoire utilisée par ladite application informatique lors de son exécution est un système de fichiers distribué, avantageusement le système de fichiers distribué « Lustre ».

12. Procédé de détermination du type de séquence temporelle d'accès mémoire selon l'une quelconque des revendications précédentes, **caractérisé en ce que**, avant ladite première classification, est réalisée une estimation de la variation temporelle dudit paramètre, de préférence par l'intermédiaire d'un outil de collecte qui est un démon, c'est-à-dire une application qui tourne en permanence et en arrière-plan.

13. Procédé de détermination du type de séquence temporelle d'accès mémoire selon l'une quelconque des revendications précédentes, **caractérisé en ce que** :
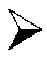 lesdites variations temporelles de ladite première classification s'étendent sur un intervalle de temps prédéterminé, de préférence inférieur à 1 minute, encore plus de préférence valant environ 20 secondes,
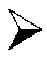 et/ou lesdites variations temporelles servant à ladite première classification sont comprises entre 10 et 100 valeurs temporelles prises par lesdits paramètres, de préférence entre 20 et 50 valeurs temporelles prises par lesdits paramètres,
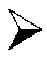 et/ou lesdites variations temporelles de ladite première classification sont réalisées toutes les secondes.

14. Méthode d'amélioration du temps d'exécution d'une application informatique, comprenant au moins un cycle, ledit cycle étant de préférence répété en permanence et en temps réel, comprenant :
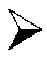 un procédé de détermination du type de séquence temporelle d'accès mémoire (9, 10, 20, 30) se déroulant lors de l'exécution de ladite application informatique, selon l'une quelconque des revendications précédentes,
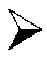 un procédé de pré-chargement de données, à partir d'un système de mémoire de masse, vers un système de mémoire cache, en fonction du type de séquence temporelle d'accès mémoire déterminé (9, 10, 20, 30), de préférence en associant respectivement aux types de séquence temporelle d'accès mémoire déterminés (9, 10, 20, 30) des types prédéterminés de pré-chargement de données,
et de préférence en ce que :
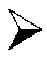 ledit procédé de détermination n'est pas réalisé par un modèle d'apprentissage ayant été préalablement paramétré à partir d'une base de données de certains types prédéterminés de séquences temporelles d'accès mémoire (9, 10, 20, 30),
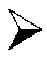 encore plus de préférence ledit procédé de détermination apprend tout seul en réalisant en temps réel lesdites classifications au fur et à mesure sur les variations temporelles desdits paramètres (1, 5).

15. Procédé de détermination du type de séquence temporelle d'accès mémoire à un système de fichiers, se déroulant lors d'une exécution d'une application informatique, comprenant :
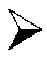 une estimation de la variation, au cours du temps, de la taille (1) de la plage de lecture et/ou d'écriture en continu des blocs (11, 21, 31) de données lus et/ou écrits lors de ladite exécution,
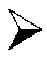 une estimation de la variation, au cours du temps, du décalage (5) de la position des blocs (11, 21, 31) de données dans la zone mémoire où ils sont lus et/ou écrits lors de ladite exécution,
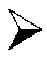 une classification de la variation au cours du temps de ladite taille (1) en deux catégories :
∘ taille plutôt croissante au cours du temps,
∘ ou bien taille plutôt constante au cours du temps,
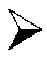 une classification de la variation au cours du temps dudit décalage (5) en deux catégories :
∘ décalage plutôt aléatoire au cours du temps,
∘ ou bien décalage plutôt constant au cours du temps,
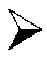 une association d'un type prédéterminé de séquence temporelle d'accès mémoire (9, 10, 20, 30) à un couple desdites catégories :
∘ séquence temporelle d'accès mémoire de type séquentiel (10) pour une taille (1) plutôt croissante et pour un décalage (5) plutôt constant,
∘ séquence temporelle d'accès mémoire de type aléatoire (20) pour une taille (1) plutôt constante et pour un décalage (5) plutôt aléatoire,
∘ séquence temporelle d'accès mémoire de type motif (30) pour une taille (1) plutôt constante et pour un décalage (5) plutôt constant.
